# EUROPEAN PATENT SPECIFICATION

(11) **EP 2 136 731 B1**
(45) Date of publication and mention of the grant of the patent: **03.05.2017**
(21) Application number: 08718107.9
(22) Date of filing: 20.03.2008
(51) Int. Cl.: A61C 8/00, B25B 15/00

(54) **SCREWDRIVER AND SCREW MEMBER ADAPTED THEREFORE**
SCHRAUBENZIEHER UND SCHRAUBENELEMENT DAFÜR
TOURNEVIS ET ÉLÉMENT DE VIS ADAPTÉ À CELUI-CI

(30) Priority: 23.03.2007 SE 0700735
(43) Date of publication of application: 30.12.2009
(73) Proprietor: Heraeus Kulzer GmbH, 63450 Hanau (DE)
(72) Inventor: BENZON, Sture, S-250 24 Helsingborg (SE); LEIKE, Per Olof, S-427 38 Billdal (SE)
(74) Representative: Karlsson, Leif Gunnar Börje
(86) International application number: PCT/EP2008/053396
(87) International publication number: WO 2008/116834

(56) References cited:
- US-A- 4 246 811
- US-A- 5 370 021
- US-A- 5 947 733
- US-A1- 2002 025 505

## Description

### Field of the Invention

This invention pertains in general to the field of a screwdriver. More particularly the invention relates to a screwdriver for tightening screw members in non-linear screw channels of dental structures, such as superstructures and/or prostheses, said screwdriver comprising a handle, a screw driver shaft portion, and a screw driver tip. Also, the present invention relates to a screw member adapted to be tightened with said screwdriver.

### Background of the Invention

In the field of dentistry and application of dental structures, such as superstructures and/or prostheses, to dental implants it is often a delicate business to tighten screw members to said dental implants, since the working space is very limited and the working pieces, such as screw members and screw channels in said dental structures are of small dimensions.

Also, it has recently been invented, by the inventors of the present invention, to provide non-linear screw channels in dental structures, whereby the mouth of the screw channels may be located on an inside, i.e. the side not visible from outside the mouth, of a patient. Thus, it is possible to manufacture dental structures with an improved appearance, since the outside of the dental structure has not to be subjected to additional treatment(s) to hide the mouth of the screw channel.

However, since the application of the dental structure is a delicate business in itself, at least for the reasons mentioned above, and the non-linear screw channel by no means simplifies the application of the dental structure, the present inventors have already invented a screwdriver suitable for the tightening of screw members in non-linear screw channels. Such a screwdriver is disclosed in Swedish patent application no. 0601754-5.

Swedish patent application no. 0601754-5 discloses a screwdriver, comprising a handle portion and a flexible and/or bendable shaft portion, with a distal end coupled to said handle portion and a proximal end coupled to a tip for driving a screw member with rotation transmitted from said handle portion. However, it may be somewhat difficult to manoeuvre the tip portion into cooperation with the screw member in the end of the non-linear screw channel, because of the bendable shaft.

US 5,947,733 discloses a screwdriver that in one section has a octagonal cross section in one plane, but this octagonal cross section is not optimized in respect of avoiding sectional slipping of the screwdriver head when rotating the screwdriver during fastening of screw member. Thus, the screwdriver according to US 5,947,733 will slip in the fitting with the screw member and may therefore damage the material, when torque is applied during fastening of the screw member. Furthermore, the contact area between the screwdriver and the screw member is not optimized, since the outer contour of the screwdriver only cooperates with the screw member in the limited contact area there between during tilting of the screwdriver. Still further, the screwdriver head according to US 5,947,733 will move up and down during rotation due to the contact between the square side of the screwdriver head and the bottom of the screw member during tilting, which is of great discomfort for the patient.

Hence, an improved screwdriver would be advantageous and in particular a screwdriver allowing for increased rigidity in respect of the manoeuvring of a tip portion of said screwdriver into cooperation with a screw member located in the bottom of a non-linear screw channel of for example a dental structure.

### Summary of the Invention

Accordingly, the present invention preferably seeks to mitigate, alleviate or eliminate one or more of the above-identified deficiencies in the art and disadvantages singly or in any combination and solves at least the above mentioned problems by providing a screwdriver as defined in claim 1 and a screw member according to claim 7.

### Brief Description of the Drawings

These and other aspects, features and advantages of which the invention is capable of will be apparent and elucidated from the following description of embodiments of the present invention, reference being made to the accompanying drawings, in which
Fig. 1 is a side view of a screwdriver according to one embodiment of the present invention,
Figs. 2a and 2b are end views in the radial plane of the tip portion of a screwdriver according to one embodiment of the present invention,
Figs. 2c and 2d are end view in the axial plane of the tip portion of a screwdriver according to one embodiment of the present invention,
Fig. 3a is an axial cross section of a screw member according to one embodiment of the present invention,
Fig. 3b is an end view in the radial plane of a screw member according to one embodiment of the present invention, and
Figs. 4a to c are views in the axial planes of an embodiment of a co-operation between a screwdriver and screw member according to the present invention.

### Description of embodiments

The following description focuses on an embodiment of the present invention applicable to a screwdriver and in particular to a screwdriver for tightening screw members in the bottom of non-linear screw channels in dental structures, such as dental superstructures and dental prostheses. However, it will be appreciated that the invention is not limited to this application but may be applied to many other fields of tightening screw members, including for example tightening small screw members in the non-linear screw channels in the construction business.

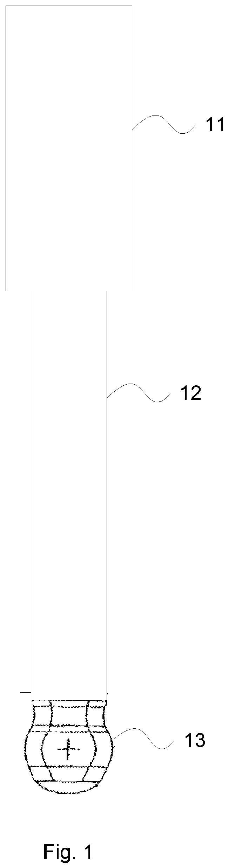

In an embodiment of the invention, according to Fig. 1, a screwdriver is provided, having a handle portion 11, a shaft portion 12, and a tip portion 13. The tip portion 13 is provided with an axial cross section of a substantially rounded shape, and a radial cross section of a substantially cornered shape, wherein at least two of the sides are of different lengths in said radial plane.

In the context of the present invention the term "radial plane" is used to define a plane perpendicular to the axial plane of the screwdriver and a screw member.

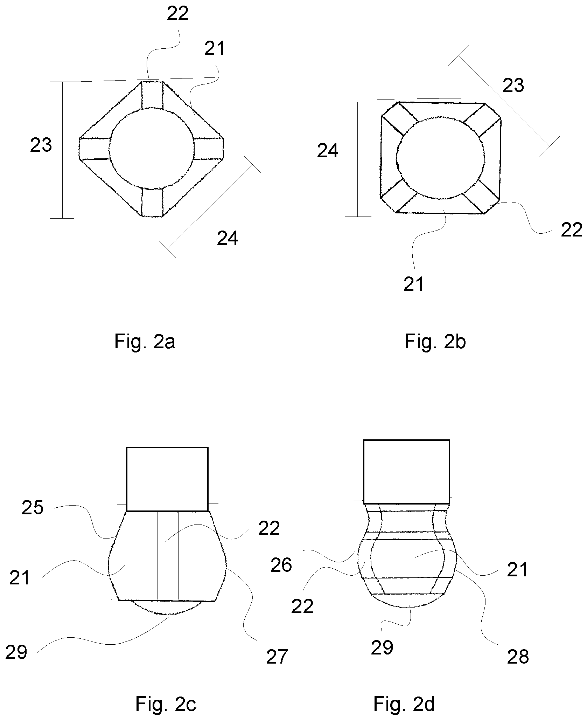

In Figs. 2a and 2b end views in the radial plane of the tip portion of the screwdriver according to Fig. 1 is disclosed. The disclosure in Fig. 2b is a 45 degree rotation around the central axis of the screwdriver in respect of the disclosure in Fig. 2a, and vice versa. This tip portion has four larger first sides 21 and four smaller second sides 22, together providing a substantially square shape. Another way of describing the shape of the tip portion in a radial view is a square shape with phased corners, such that additionally four sides are formed. Thus, an octagonal shape is obtained, such that the end views in the radial plane of the tip portion of the screwdriver is an octagonal.

The relationship between the lengths of the first sides 21 and the second sides 22 is of importance. If the general perception of the cross section in the radial plane is spherical, i.e. if the eight sides have the same lengths, the receptive recess in said screw member will be damaged during rotation. This is caused due to the fact that the limit in respect of the force applied for the screwdriver to slip, and thereby damage the corners of the screwdriver and the screw member, is determined by the length of the largest sides. If the sides are of the same length, then the length of the largest side is minimized, for geometrical reasons. The size of a screwdriver and a screw member for tightening a dental structure to a dental implant is very limited, since these parts needs to be very tiny.

Thereby, for manufacturing reasons, the cross section in the radial plane of such a screwdriver and screw member is not ideally of a substantially circular shape, since this would maximize the cross section area. This would be a disadvantage with regard to the small sizes of tools.

Also, due to the small sizes of the tools, the forces applied with a screwdriver for fastening a screw member when fixing a dental structure to a dental implant are extremely high. This further means that the ideal shape of the cross section in the radial plane not should be of a substantially circular shape, i.e. the same lengths on the first and second sides 21, 22. The same lengths of said first and second sides 21, 22 would minimize the minimal force needed for the screwdriver to slip. Furthermore, the material of screw members for fixing dental structures to dental implants are usually selected from biocompatible materials, such as titanium, and oxides thereof, etc., which materials may present limited endurance to stress, fatigue, etc.

The first and second sides 21 and 22 are curved, due to the rounded shape in the axial plane. Thus, a perpendicular distance to the central axis of the screwdriver, from the first and second sides 21 and 22 to the central axis of the screwdriver, varies along said first and second sides 21 and 22, whereby also the diagonals perpendicular to the central axis between two opposite sides vary along said first and second sides 21 and 22. At the position on the first and second sides 21 and 22 where the distance perpendicular to the central axis of the screwdriver is the greatest, a first maximum diagonal 23 extending perpendicularly to two opposite second sides 22 and a second maximum diagonal 24 extending perpendicularly to two opposite first sides 21 are defined. In respect of the screwdriver tip portion the present inventors have found that the relationship between the first maximum diagonal 23 and the second maximum diagonal 24 must be in the interval of 1,2 to 1,3, such as 1,21, 1,22, 1,23, 1,24, 1,25, 1,26, 1,27, 1,28, and 1,29 as specifically preferred. This relationship between the first maximum diagonal 23 and the second maximum diagonal 24 is calculated by dividing said first maximum diagonal by said second maximum diagonal. In one example said first maximum diagonal is 2,01 ± 0,02 mm and said second maximum diagonal 1,63 ± 0,02 mm. In these intervals the screwdriver presents an ability to provide satisfactory torque, such that it does not slip in the fitting with the screw member and does not damage the material, while also providing a satisfactory cross section area in the radial plane of the tip portion to fit within the boundaries of the very small screw member, during fastening of dental structures with non-linear screw channels to dental implants.

In Figs. 2c and 2d a view of an axial plane of the tip portion of the screwdriver according to Fig. 1 is disclosed. The disclosure in Fig. 2d is a 45 degrees rotation around the central axis of the screwdriver in respect of the disclosure in Fig. 2c, and vice versa. The shape of the tip portion in an axial plane is substantially rounded. Since the tip portion, in the radial plane, is provided with the first and second maximum diagonals 23 and 24, the tip portion in the axial plane may be provided with a first and a second curved portion 25 and 26, corresponding, along the first and second sides 21 and 22, to said first and second diagonals, respectively. Said first curved portion 25 may be provided with a first radius portion 27, and said second curved portion 26 may be provided with a second radius portion 28, which radius portions 27 and 28 are intended to follow the inside walls of a fitting portion of a screw member, adapted to receive a screwdriver according to the present invention, during tilting and/or angling of the screwdriver in respect of the screw member. Figs. 2c and 2d disclose that the rounded cross-section in an axial plane of the screwdriver results in a first curved portion 25 and a second curved portion 26, respectively. The first curved portion 25 and a second curved portion 26 extend from the distal end of the tip portion towards the proximal end of the tip portion. Fig. 2c discloses that the first curved portion 25 may end at a distance from the proximal end point 29. Thus, a proximal end point of the first curved portion 25 may be located at a greater distance, in a radial plane, from the central axis than the distal end point of the curved proximal end of the tip portion of the screwdriver. Fig. 2d discloses that the second curved portion 26 may continue, i.e. transcend into, the curved proximal end of the tip portion of the screwdriver. This results in that the screwdriver head not will move up and down during rotation, since the sides 22 not need to interact with the bottom of the recess of the screw member, whereby discomfort of the patient may be prohibited.

In respect of a first and second maximum diagonal 23 and 24 of 2,01 ± 0,02 and 1,63 ± 0,02 mm, respectively, the radius of the radius portions 27 and 28 may be 0,77 mm and 0,81 mm, respectively. The bottom part of the tip portion, i.e. the part that will be in contact with the bottom of the recess in the fitting of the screw member, may be substantially spherical, such as spherical.

In one example this bottom part of the tip portion has a radius of 0,88 mm and a diameter of 1,2 mm. The centre of said radius portions may in this example be located 0,87 mm from the bottom part of the tip portion, i.e. the centre of the spherical part with a radius of 0,88 mm and a diameter of 1,2 mm.

Thus, the screwdriver may be tilted and/or angled, such that the axial direction of the shaft portion of the screwdriver does not coincide with the axial direction of the screw member, intended to be fastened by said screwdriver. Such a tilting may for example be approximately 20°, while still providing satisfactory torque between the screwdriver of the present invention and a screw member adapted therefore, such as a screw member according to the present invention. This means that the axial direction of the shaft portion of the screwdriver does not coincide with the axial direction of a threaded part of a dental implant, to which a screw member and thereby also a dental structure, is intended to be fixed.

The bottom part of the tip portion, i.e. the part that will be in contact with the bottom of the recess in the fitting of the screw member, may be substantially spherical, such as spherical. In one example this bottom part of the tip portion has a radius of 0,88 mm and a diameter of 1,2 mm. The rounded shape of the sides of the tip portion in the axial plane allows said tilting while still providing substantially the same contact surface with side walls in the recess of the fitting of a screw member during the tilting of the screwdriver. Thus, the tip portion of the screwdriver may be in contact with the bottom and the sidewalls of the recess of the fitting of a screw member during the entire rotational tightening of the screw member. This provides stability to the tightening process, such that the risk for slipping of the screwdriver in the fitting of the screw member is decreased. Such slipping would damage the screw member, which would be devastating for the patient, since this would render it extremely difficult to exchange or remove the thus fixated dental structure. Also, in this way the screwdriver and the screw member may cooperate also in a tilted position of the screwdriver in a way giving satisfactory torque capacity, such as a torque capacity of at least 30 to 35 Ncm.

The phased corner portions of the tip portion may be slightly convex, i.e. provided with a radius. If the phased corner portions are convex the screwdriver may be rotate a screw member in a smoother way. However, the manufacturing process of the screwdriver and the screw members adapted for such screwdrivers is more complicated if the corner portions are to be convex or provided with a radius.

Thus, a screwdriver comprising a handle portion 11 and a shaft portion 12, with a distal end coupled to said handle portion 11 and a proximal end coupled to a tip portion 13 for driving a screw member with rotation transmitted from said handle portion 11, as disclosed in Fig. 1, may be provided, which tip portion has a substantially rounded cross-section in an axial plane, such as disclosed in Figs. 2c and 2d, and a substantially polygonal shaped cross-section in a radial plane, such as the octagonal shape disclosed in Figs. 2a and 2b, with at least a first and a second diagonal, extending perpendicularly to two opposite sides of the polygonal, respectively, such as the sides 22 and 21, wherein said first diagonal is greater than said second diagonal.

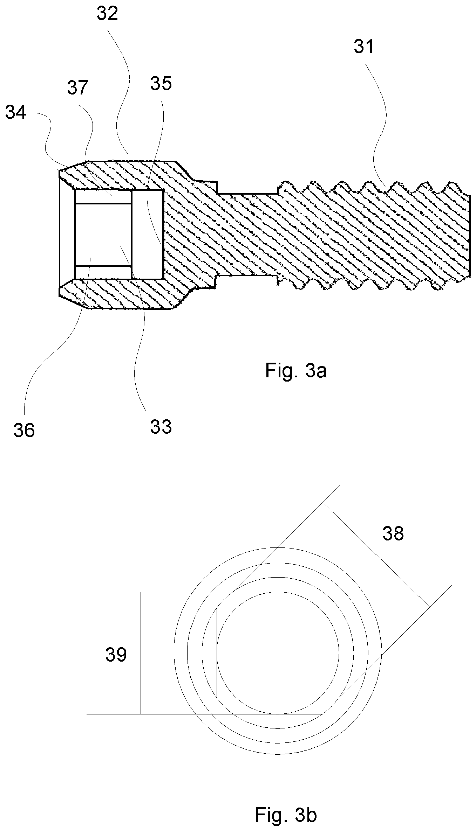

The present invention also relates to a screw member, which is adapted to be tightened by a screwdriver according to above, for fixating dental structures to dental implants. A cross section of such screw member in the axial plane is disclosed in Fig. 3a. The material of the screw member according to the present invention may for example be selected from suitable biocompatible materials, such as titanium, and oxides thereof, etc., which materials are well known to the skilled artisan in the field of fixating dental structures to dental implants.

Fig. 3a discloses a screw member comprising a threaded part 31 to be engaged with a dental implant and a screw member head 32. The screw member head 32 is provided with a recess 33 for receiving the tip portion of the screwdriver according to above. Also, the upper outside of the screw member head may be provided with phasing 34.

The phasing 34 may be a substantially rounded shape or being a radial phasing. This phasing 34 prevents the screw member from cutting into the wall of the dental structure. This may be a problem, since the angled position of the screwdriver results in a component of force directed from the contact surface of the screw member into the side wall of the dental structure.

The recess 33 has a bottom 35 and first and second sidewalls 36 and 37. A first diagonal 38 extending perpendicularly to two opposite second side walls 37 and a second diagonal 39 extending perpendicularly to two opposite first side walls 36 are also disclosed. The screw member according to Fig. 3 has flat bottom 35, onto which the bottom part of the tip portion of the screwdriver according to above may rest. In this way the bottom part of the tip portion will be in contact with the bottom 35 and work substantially as a ball and socket joint during tilting of the screwdriver, even if the screw member does not define a perfect socket. Thus, the bottom part of the tip portion of the screwdriver may be in contact with the bottom 35 of a screw member during the entire rotational tightening of the screw member.

In another embodiment the bottom 35 is convex. In this embodiment the bottom 35 may be provided with a proportionally large radius, such that the convexity is small, and does not make up a too large proportion of the fitting, i.e. the recess 33.

In respect of the screw member the present inventors have found that the relationship between the first diagonal 38 and a second diagonal 39 must be in the interval of 1,2 to 1,3, such as 1,21, 1,22, 1,23, 1,24, 1,25, 1,26, 1,27, 1,28, and 1,29 as specifically preferred. In one example said first diagonal 38 is 2,04 ± 0,02 mm and said second diagonal 39 is 1,65 ± 0,02 mm.

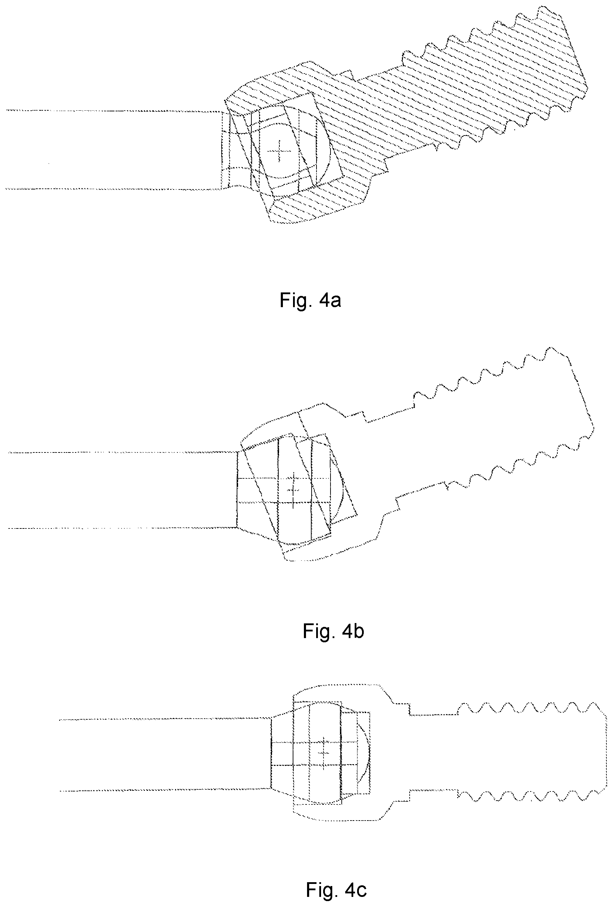

In Figs. 4a to c discloses embodiments of cooperation between a screwdriver and screw member. Figs. 4a and 4b discloses the cooperation in an axial plane through the first diagonals 23 and 38 of the screwdriver and screw member, respectively. Fig. 4c discloses the cooperation in an axial plane through the second diagonals 24 and 39 of the screwdriver and screw member, respectively. Figs. 4b and 4c discloses the cooperation in a tilted position of the screwdriver in respect of the screw member.

Applications and use of the above described according to the invention are various and include exemplary fields such as tightening other implant structures in animal bodies, especially when tightening titanium screw members of very small sizes, where there may be a limited space to work in, resulting in a tilting of the screwdriver.

The elements and components of an embodiment of the invention may be physically, functionally and logically implemented in any suitable way. Indeed, the functionality may be implemented in a single unit, in a plurality of units or as part of other functional units. As such, the invention may be implemented in a single unit, or may be physically and functionally distributed between different units and processors.

Although the present invention has been described above with reference to specific illustrative embodiments, it is not intended to be limited to the specific form set forth herein. Rather, the invention is limited only by the accompanying claims and other embodiments than the specific above are equally possible within the scope of these appended claims.

## Claims

1. A screwdriver for fastening dental structures to dental implants, said screw driver comprising a central axis, a handle portion (11) and a shaft portion (12), with a distal end attached to said handle portion (11) and a proximal end attached to a tip portion (13) for driving a screw member with rotation transmitted from said handle portion (11), said tip portion (13) having a distal end attached to the shaft portion (12) and a curved proximal end with a proximal end point (29), **characterize d** in that
said tip portion has a substantially rounded cross-section in an axial plane, and a substantially polygonal shaped cross-section in a radial plane with at least a first (23) and a second diagonal (24), extending perpendicularly to two opposite sides of the polygonal, respectively, wherein said first diagonal is greater than said second diagonal, wherein the relationship between said first diagonal (23) and said second diagonal (24) is selected in the interval of 1,2 and 1,3, the rounded cross-section in a first axial plane resulting in a first curved portion (25) and in a second axial plane resulting in a second curved portion (26), extending from the distal end of the tip portion towards the proximal end of the tip portion, wherein the first curved portion (25) ends at a distance from the proximal end point (29), such that a proximal end point of the first curved portion (25) is located at a greater distance from the central axis in a radial plane than the distal end point of the curved proximal end.

2. The screwdriver according to claim 1, wherein said first and second diagonals are a first maximum diagonal (23) and a second maximum diagonal (24), respectively.

3. The screwdriver according to claim 1 or 2, wherein the polygonal shape is a octagonal shape.

4. The screwdriver according to claims 1, 2 or 3, wherein said first diagonal (23) extending perpendicularly to the centre of two opposite second sides (22) and a second diagonal (24) extending perpendicularly to two opposite first sides (21).

5. The screwdriver according to claim 4, wherein said second sides (22) are slightly convex.

6. The screwdriver according to claim 1, wherein first curved portion (25) is provided with a first radius portion (27), and said second curved portion (26) is provided with a second radius portion (28).

7. A screw-member for fastening dental structures to dental implants, comprising a threaded part (31) in a first end and a screw member head (32) with a recess (33) in a second end for receiving a tip portion of a screwdriver according to any of claims 1 to 6, **characterize d** in that
said recess having a substantially polygonal shaped cross-section in a radial plane with at least a first and a second diagonal (38, 39), extending perpendicularly to two opposite sides of the polygonal, respectively, wherein said first diagonal (38) is greater than said second diagonal (39), wherein the relationship between the first diagonal (38) and the second diagonal (39) is selected in the interval of 1,2 to 1,3.

8. The screw member according to claim 8, wherein an upper outside of the screw member head is provided with a phasing (34).

## Patentansprüche

1. Ein Schraubenzieher zur Befestigung dentaler Teile an dentalen Implantaten, wobei der Schraubenzieher eine Mittelachse, einen Griff (11) und einen Mittelteil (12) umfasst, mit einem distalen Ende, das an dem Griff (11) angebracht ist, und einem proximalen Ende, das an einem Kopfteil (13) angebracht ist, um eine Schraube durch Übertragung der Drehbewegung des Griffes (11) auf die Schraube zu übertragen, wobei das Kopfteil (13) ein distales Ende aufweist, das an dem Mittelteil (12) angebracht ist, und einen gekrümmten proximalen Endpunkt (29) aufweist, **dadurch gekennzeichnet, dass**
das Kopfteil einen im Wesentlichen abgerundeten Querschnitt in einer Axialebene und einen im Wesentlichen polygonal-geformten Querschnitt in einer Radialebene aufweist mit mindestens einer ersten (23) und einer zweiten Diagonale (24), die jeweils senkrecht zu zwei gegenüberliegenden Kanten des Polygons verlaufen, wobei die erste Diagonale größer ist als die zweite Diagonale, und das Verhältnis zwischen der ersten Diagonale (23) und der zweiten Diagonale (24) in dem Bereich von 1,2 bis 1,3 liegt,
wobei der abgerundete Querschnitt in einer ersten Axialebene einen ersten abgerundeten Teil (25) und in einer zweiten Axialebene einen zweiten abgerundeten Teil (26) ausbildet, die ausgehend von dem distalen Ende des Kopfteils in Richtung des proximalen Endes des Kopfteils verlaufen, wobei der erste abgerundete Teil (25) zum proximalen Endpunkt (29) beabstandet endet, sodass ein proximaler Endpunkt des ersten abgerundeten Teils (25) in einem größeren Abstand zur Mittelachse in einer Radialebene liegt als der distale Endpunkt des gekrümmten proximalen Endes.

2. Der Schraubenzieher nach Anspruch 1, wobei die erste und die zweite Diagonale jeweils eine erste maximale Diagonale (23) und eine zweite maximale Diagonale (24) sind.

3. Der Schraubenzieher nach Anspruch 1 oder 2, wobei die polygonale Form eine achteckige Form ist.

4. Der Schraubenzieher nach Anspruch 1, 2 oder 3, wobei die erste Diagonale (23) senkrecht zur Mitte der zwei gegenüberliegenden zweiten Seiten (22) verläuft und eine zweite Diagonale (24) senkrecht zu zwei gegenüberliegenden ersten Kanten (21) verläuft.

5. Der Schraubenzieher nach Anspruch 4, wobei die zweiten Kanten (22) leicht konvex sind.

6. Der Schraubenzieher nach Anspruch 1, wobei der erste abgerundete Teil (25) mit einem ersten Teil mit Radius (27) versehen ist und der zweite abgerundete Teil (26) mit einem zweiten Teil mit Radius (28) versehen ist.

7. Eine Schraube zur Befestigung dentaler Teile an dentalen Implantaten umfassend einen ein Gewinde aufweisenden Teil (31) an einem ersten Ende und einen Schraubengliedkopf (32) mit einer Ausnehmung (33) an einem zweiten Ende zur Aufnahme eines Kopfteils eines Schraubenziehers nach einem der vorangegangenen Ansprüche 1 bis 6, **dadurch gekennzeichnet, dass**
die Ausnehmung einen im Wesentlichen polygonal-geformten Querschnitt in einer Radialebene umfassend mindestens eine erste und eine zweite Diagonale (38, 39) aufweist, die jeweils senkrecht zu zwei gegenüberliegenden Seiten des Polygons verlaufen, wobei die erste Diagonale (38) größer als die zweite Diagonale (39) ist, und das Verhältnis zwischen der ersten Diagonale (38) und der zweiten Diagonale (39) in dem Bereich von 1,2 bis 1,3 liegt.

8. Das Schraubenglied nach Anspruch 8, wobei die obere Außenfläche des Schraubengliedkopfes mit einem auslaufenden Absatz (34) versehen ist.

## Revendications

1. Tournevis pour fixer des structures dentaires à des implants dentaires, ledit tournevis comprenant un axe central, une portion de poignée (11) et une portion de tige (12), avec une extrémité distale raccordée à ladite portion de poignée (11) et une extrémité proximale raccordée à une portion de pointe (13) pour entraîner un organe de vis avec rotation transmise à partir de ladite portion de poignée (11), ladite portion de pointe (13) possédant une extrémité distale raccordée à la portion de tige (12) et une extrémité proximale incurvée avec un point d'extrémité proximale (29), **caractérisé en ce que**
ladite portion de pointe possède une section transversale sensiblement arrondie, dans un plan axial, et une section transversale sensiblement en forme de polygone dans un plan radial avec au moins des première (23) et seconde (24) diagonales, s'étendant perpendiculairement à deux côtés opposés du polygone, respectivement, dans lequel ladite première diagonale est plus grande que ladite seconde diagonale, dans lequel la relation entre ladite première diagonale (23) et ladite seconde diagonale (24) est sélectionnée dans l'intervalle de 1,2 et 1,3, la section transversale arrondie dans un premier plan axial ayant pour résultat une première portion incurvée (25) et dans un second plan axial ayant pour résultat une seconde portion incurvée (26), s'étendant à partir de l'extrémité distale de la portion de pointe vers l'extrémité proximale de la portion de pointe, dans lequel la première portion incurvée (25) se termine à une distance du point d'extrémité proximale (29), de telle sorte qu'un point d'extrémité proximale de la première portion incurvée (25) soit situé à une distance de l'axe central, dans un plan radial, plus grande que celle du point d'extrémité distale de l'extrémité proximale incurvée.

2. Tournevis selon la revendication 1, dans lequel lesdites première et seconde diagonales sont une première diagonale maximum (23) et une seconde diagonale maximum (24), respectivement.

3. Tournevis selon la revendication 1 ou 2, dans lequel la forme de polygone est une forme d'octogone.

4. Tournevis selon les revendications 1, 2 ou 3, dans lequel ladite première diagonale (23) s'étend perpendiculairement au centre de deux seconds côtés opposés (22) et une seconde diagonale (24) s'étend perpendiculairement à deux premiers côtés opposés (21).

5. Tournevis selon la revendication 4, dans lequel lesdits seconds côtés (22) sont légèrement convexes.

6. Tournevis selon la revendication 1, dans lequel la première portion incurvée (25) est pourvue d'une première portion de rayon (27), et ladite seconde portion incurvée (26) est pourvue d'une seconde portion de rayon (28).

7. Organe à vis pour fixer des structures dentaires à des implants dentaires, comprenant une partie filetée (31) dans une première extrémité et une tête d'organe de vis (32) avec un évidement (33) dans une seconde extrémité pour recevoir une portion de pointe d'un tournevis selon l'une quelconque des revendications 1 à 6, **caractérisé en ce que**
ledit évidement possède une section transversale sensiblement en forme de polygone, dans un plan radial, avec au moins des première et seconde diagonales (38, 39) s'étendant perpendiculairement à deux côtés opposés du polygone, respectivement, dans lequel ladite première diagonale (38) est plus grande que ladite seconde diagonale (39), dans lequel la relation entre la première diagonale (38) et la seconde diagonale (39) est sélectionnée dans l'intervalle de 1,2 à 1,3.

8. Organe à vis selon la revendication 8, dans lequel un extérieur supérieur de la tête d'organe de vis est pourvu d'un phasage (34).
